(19) Europäisches Patentamt / European Patent Office / Office européen des brevets

(11) **EP 4 451 636 A1**

(12) **EUROPEAN PATENT APPLICATION**

(43) Date of publication:
**23.10.2024 Bulletin 2024/43**

(21) Application number: **23305588.8**

(22) Date of filing: **18.04.2023**

(51) International Patent Classification (IPC):
**H04L 41/142** (2022.01)  **H04L 41/147** (2022.01)
**H04L 43/04** (2022.01)  **H04L 43/08** (2022.01)
**H04L 41/5067** (2022.01)

(52) Cooperative Patent Classification (CPC):
**H04L 41/142; H04L 41/147; H04L 43/04;**
**H04L 43/08;** H04L 41/5067

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
• **Mitsubishi Electric R&D Centre Europe B.V.**
**1119 NS  Schiphol Rijk Amsterdam (NL)**
Designated Contracting States:
**FR**
• **MITSUBISHI ELECTRIC CORPORATION**
**Chiyoda-ku**
**Tokyo 100-8310 (JP)**
Designated Contracting States:
**AL AT BE BG CH CY CZ DE DK EE ES FI GB GR HR HU IE IS IT LI LT LU LV MC ME MK MT NL NO PL PT RO RS SE SI SK SM TR**

(72) Inventors:
• **KHANFOUCI, MOURAD**
**35708 RENNES CEDEX 7 (FR)**
• **GRESSET, Nicolas**
**35708 RENNES CEDEX 7 (FR)**

(74) Representative: **Plasseraud IP**
**104 Rue de Richelieu**
**CS92104**
**75080 Paris Cedex 02 (FR)**

(54) **LEARNING FOR QUALITY-OF-EXPERIENCE WITH LOW QUALITY-OF-EXPERIENCE FEEDBACK**

(57)    The invention relates to a method for determining and/or maximizing a quality-of-experience related to an application deployed over a mobile network, the method being implemented by at least one network function of the mobile network, the method comprising:
- obtaining information indicating a distribution of possible levels of quality-of-service provided by the mobile network for the application over a period of time,
- obtaining or generating a model describing, for the application, relationships between the possible levels of quality-of-service and possible states of quality-of-experience, and
- extrapolating a statistical evolution of the quality-of-experience related to the application based on the obtained information and on the model.
    The invention further relates to a corresponding device and to a corresponding computer program.

FIG. 5

## Description

**Technical Field**

This disclosure pertains to the field of telecommunications.

The disclosure more particularly relates to a method for determining a quality-of-experience related to an application deployed over a mobile network, to a corresponding device, and to a corresponding computer program.

**Background Art**

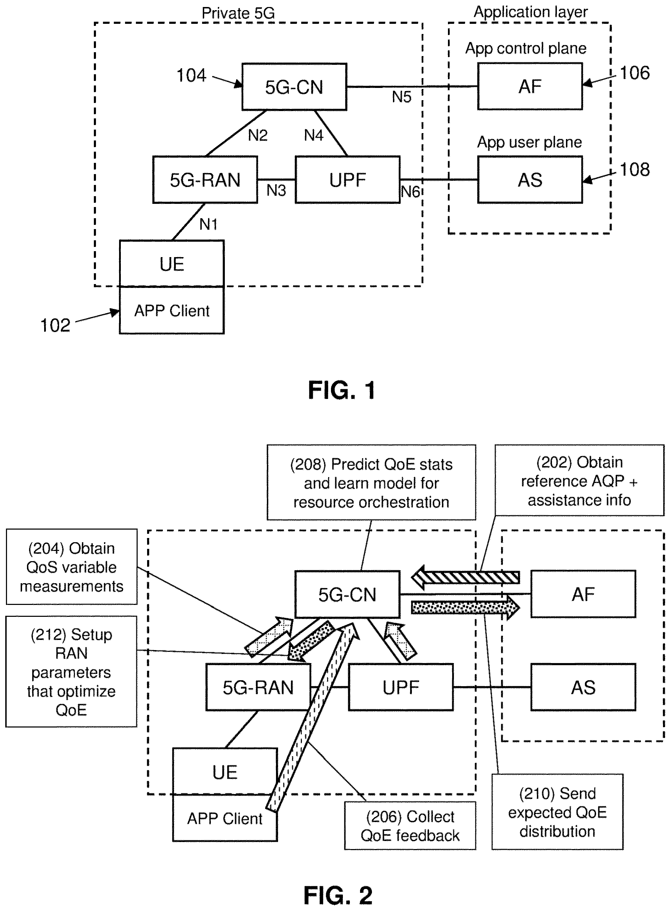

The figure 1 illustrates a typical deployment of an application over a private 5G network in a smart factory, where the considered application is a video streaming application from clients located in the factory floor towards a server (108) located in the edge cloud. The edge server collects data from the clients (102) and provides additional functionalities such as image recognition or artificial intelligence (AI).

A 5G mobile communication network, or 5G system, comprises a 5G core network (5GCN) and a 5G New Radio Access Network (5G-RAN). The user equipments (UE) may connect over the 5G New Radio Access Network to the 5GCN and further to Data Networks (DN) like the Internet.

The key components of the 5GCN are network functions split up by service to govern the network behavior. These network functions include:

- the Access and Mobility Management Function (AMF) which acts as a single-entry point for the UE connection,
- respective Session Management Functions (SMF) selected by the AMF for managing a user session for a service requested by the UE,
- the User Plane Function (UPF) which transports the IP data traffic (user plane) between the User Equipment (UE) and the external networks, and
- the Policy Control Function (PCF) which provides the policy control framework,
- the Unified Data Management (UDM) function which manages network user data,
- the Network Data Analytics Function (NWDAF) which collects data from the other 5G network functions, processes these data and outputs analytics, for instance statistical analytics or machine learning predictions, to support the other 5G network functions,
- the Network Exposure Function (NEF) which exposes 3GPP core network capabilities to third parties,
- etc.

The 5G network stack comprises an open wireless architecture layer, a network layer, an open transport layer and an application layer (APP). The latter can be mapped to the presentation layer and to the application layer of the OSI stack.

The application function (AF) (106) is the control plane of the application layer and provides application services.

According to the state-of-the-art, the AF may request the 5G core network (5GCN) (104) to setup a session with specific quality-of-service (QoS) parameters that correspond to a reference QoS profile and to an alternative QoS profile (AQP).

The state-of-the-art solutions for network "admission control" to the request from the AF is to respond to this request by the means of a network acknowledgment of the request, i.e. an authorization of the AF and a signalling of the possible QoS session from the network side, i.e. that reference/alternative QoS parameters are achievable by the network. In the state-of-the-art, the network may only react to the request of the AQP without long-term optimization of the application behavior and/or outage.

In another patent document [1] filed for the same applicant under the title "Learning for quality-of-experience optimization in industrial deployment of applications", a proactive technique is proposed to learn, from the collected feedback of the application clients, the sensitivity of the application quality-of-experience (QoE) to degradation of the QoS. This proposed technique further allows orchestrating network QoS between multiple AFs to maximize the overall quality-of-experience for the deployed applications.

The basic principle of this technique is to use direct feedback from the application clients, i.e. mean opinion score (MoS) and to approximate the complex QoS-QoE behavior with a simple exponential model by invoking the exponential hypothesis IQX [reference IQX].

However, in some deployment conditions, the 5G-CN may not be able to access to this QoE feedback from the application layer or may have access to a reduced feedback dataset from the application clients. The proactive technique proposed in [1] may thus not be applicable in these deployment conditions.

## Summary

This disclosure improves the situation.

It is proposed a method for determining and/or maximizing a quality-of-experience of an application that is served by a mobile network, the method being implemented by at least one network function of the mobile network, the method comprising:

- obtaining information indicating a grouped frequency distribution of measurements relating to a quality-of-service provided by the mobile network for the application over a period of time, the grouped frequency distribution having a plurality of grouped time intervals with a one-to-one relationship with a plurality of possible levels of quality-of-service,
- obtaining or generating a model describing relationships between the possible levels of quality-of-service and possible states of quality-of-experience, and
- extrapolating a statistical evolution of the quality-of-experience related to the application based on the obtained information and on the model.

The method enables predicting a future long-term satisfaction for an application from past and/or present observations.

The predicted future long-term satisfaction may be further used to optimize the operation of applications that are industrially deployed to private communication networks, such as 5G private networks and beyond.

In embodiments of the method, the grouped frequency distribution is a probability distribution that comprises a plurality of presence time values, a presence time value being associated to at least one corresponding level of quality-of-service of the plurality of possible levels of quality-of-service. For instance, it can be considered that the measurement period comprises a plurality of measurement cycles where one or more indicators of quality-of-service are measured. The indicators of quality-of-service may include latency, throughput, jitter, etc. The resulting measurements may be binned into a number of discrete levels interpreted as a number of possible levels of quality-of-service. It is then possible to count the number of times that a given possible level of quality-of-service is obtained during the total number of measurement cycles. Such counting procedure may be performed for all possible levels of quality-of-service, allowing to evaluate presence time values as proportions of the measurement period, with an evaluated presence time value being associated to a corresponding level of quality-of-service of the plurality of possible levels of quality-of-service. Further, a plurality of possible levels of quality-of-service may be aggregated into a group of possible levels of quality-of-service (for instance a first group of 'good' QoS levels which correspond to the quality-of-service meeting or exceeding a target criterion and a second group of 'bad' QoS levels which correspond to the quality-of-service not meeting the target criterion).

In embodiments of the method, the grouped frequency distribution is a stationary distribution that comprises a plurality of average presence time values, an average presence time value being associated to at least one corresponding level of quality-of-service of the plurality of possible levels of quality-of-service.

In embodiments, the method further comprises:

- obtaining measurements relating to a quality-of-service provided by the mobile network for the application during a measurement period, and
- by analyzing the measurements, determining the grouped frequency distribution.

In embodiments of the method, generating the model comprises extracting features from the measurements by performing a dimensionality reduction of the measurements.

In embodiments of the method, generating the model further comprises estimating the relationships between the possible levels of quality-of-service and the possible states of quality-of-experience based on the extracted features.

In embodiments, the method further comprises using, as an input for generating the model, quality-of-experience feedback obtained from a network data analytics function of the mobile network and/or from a network exposure function of the mobile network.

In embodiments of the method, generating the model comprises classifying the quality-of-experience feedback to output a distribution of the possible states of quality-of-experience.

In embodiments, the method further comprises using, as an input for generating the model, one or more quality-of-experience measurements obtained for instance from the application function, the one or more quality-of-experience measurements indicating a statistical evolution of the quality-of-experience over the period of time.

In embodiments of the method, the model further comprises an initial distribution of the possible states of quality-of-experience and transitional relationships between the possible states of quality-of-experience.

In embodiments, the method further comprises adjusting parameters of the model by running an expectation maximization algorithm.

In embodiments of the method, the adjusted parameters of the model comprise an adjusted distribution of the possible states of quality-of-experience, and the method further comprises transmitting the adjusted distribution of the possible states of quality-of-experience to an application function corresponding to the application.

In embodiments of the method, the adjusted parameters of the model comprise adjusted transitional relationships between the possible states of quality-of-experience and adjusted relationships between the possible levels of quality-of-service and the possible states of quality-of-experience, the method further comprising transmitting the adjusted transitional relationships and the adjusted relationships to a resource orchestrator.

In embodiments, the method further comprises, at the resource orchestrator, using the adjusted transitional relationships and the adjusted relationships to provision network resources of the mobile network in such a way that a quality of experience, predicted from the adjusted relationships, is maximized.

It is further proposed a system configured to carry out the above method, the system comprising at least one network function entity of a mobile network.

It is further proposed a computer program comprising instructions which, when the program is executed by a computer, cause the computer to carry out the above method.

Unless specifically stated otherwise, as apparent from the following discussions, it is appreciated that throughout the specification discussions utilizing terms such as "computing", "calculating", "generating", or the like, refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices.

Embodiments of the present invention may include apparatuses for performing the operations herein. This apparatus may be specially constructed for the desired purposes, or it may comprise a general-purpose computer or Digital Signal Processor ("DSP") selectively activated or reconfigured by a computer program stored in the computer. Such a computer program may be stored in a computer readable storage medium, such as, but is not limited to, any type of disk including floppy disks, optical disks, CD-ROMs, magnetic-optical disks, read-only memories (ROMs), random access memories (RAMs) electrically programmable read-only memories (EPROMs), electrically erasable and programmable read only memories (EEPROMs), magnetic or optical cards, or any other type of media suitable for storing electronic instructions, and capable of being coupled to a computer system bus.

The processes presented herein are not inherently related to any particular computer or other apparatus. Various general-purpose systems may be used with programs in accordance with the teachings herein, or it may prove convenient to construct a more specialized apparatus to perform the desired method. The desired structure for a variety of these systems will appear from the description below. In addition, embodiments of the present invention are not described with reference to any particular programming language. It will be appreciated that a variety of programming languages may be used to implement the teachings of the inventions as described herein.

**Brief Description of Drawings**

Other features, details and advantages will be shown in the following detailed description and on the figures, on which:

**Fig. 1**
[Fig. 1] illustrates a typical deployment of an application over a private 5G network.

**Fig. 2**
[Fig. 2] illustrates an exemplary basic workflow for integrating an application with a private 5G network according to an embodiment of the invention.

**Fig. 3**

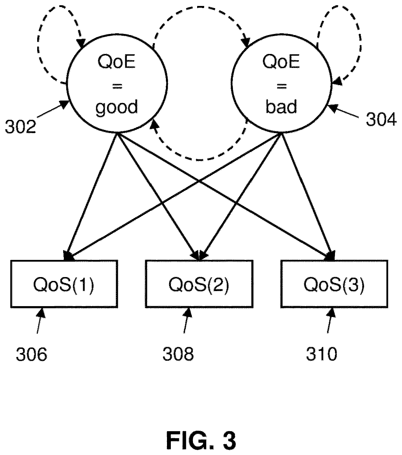

[Fig. 3] is a representation of a hidden Markov model of a QoS-QoE relationship according to an embodiment of the invention.

**Fig. 4**

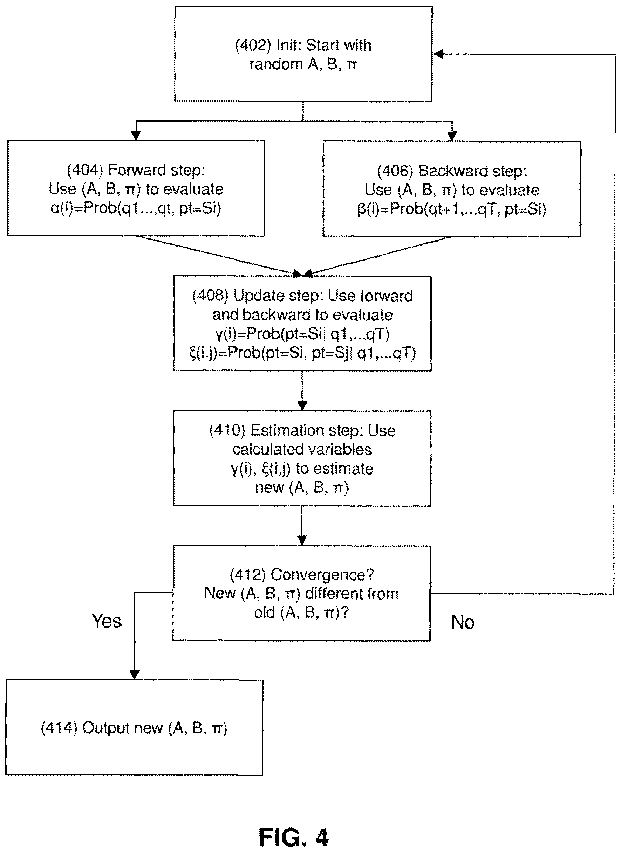

[Fig. 4] is an overall description of a Baum-Welch algorithm for learning the parameters of the hidden Markov model represented in Fig. 3 according to an embodiment of the invention.

**Fig. 5**

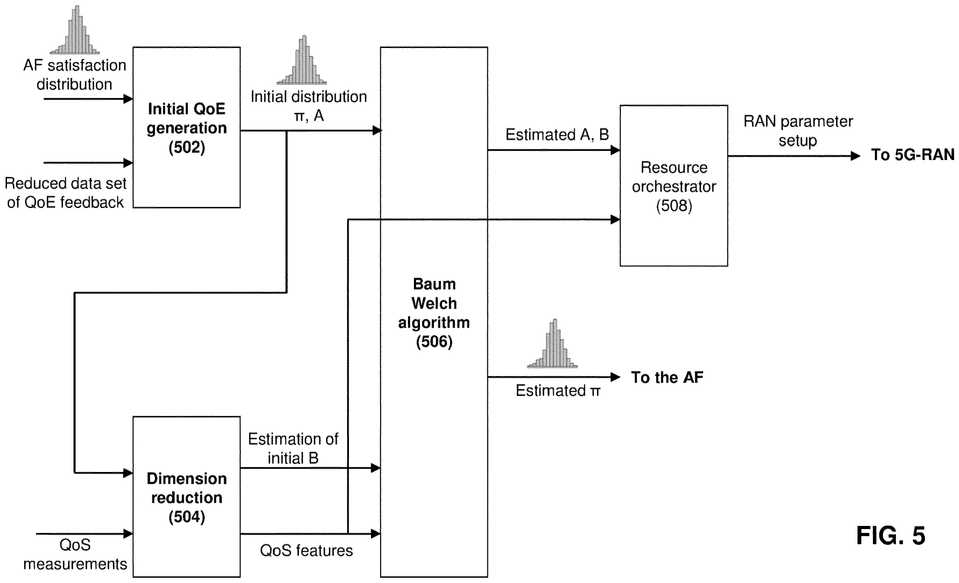

[Fig. 5] illustrates an exemplary workflow according to an embodiment of the invention.

**Description of Embodiments**

The present disclosure proposes integrating an application with a private 5G network through an exemplary basic workflow illustrated in Figure 2. This exemplary basic workflow provides a solution for the statistical prediction of the application satisfaction in industrial deployment of applications.

Specific exemplary embodiments for the different parts of the workflow are further presented as follows. All exemplary embodiments have the same purpose of allowing the 5G-CN to determine and/or predict the quality-of-experience offered to the application and to derive metrics for resource orchestration in the 5G system in order to orchestrate the resources to maximize at least an aspect of the QoE of the application.

The AF (106) requests the 5GCN (104) to setup a session with specific QoS parameters that correspond to a reference QoS profile and to a list of one or more alternative QoS profiles. Thus, the 5GCN (106) obtains (202) these specific QoS parameters from the AF (104).

The 5GCN (104) may further obtain or collect (204) QoS measurements from other entities of the 5G system, such as the radio access network (5G-RAN) and the user plane function (UPF).

The 5GCN (104) may further evaluate probabilities associated to the levels of QoS that are achieved by the network during a time period for the application. These probabilities can be for example the average of the time specific QoS level are achieved during the time period, or the stationary distribution of the average presence time of the QoS in specific QoS level obtained from modelling of the QoS measurements. For instance, the 5GCN may calculate the QoS probability distribution as the average time the QoS profile is measured by the network data analytics function (NWDAF) during a measurement period over the total number of different QoS profile measurements available. These measurements may be performed by the access and mobility function (AMF) for the 5G-RAN and/or by the session management function (SMF) for the transport network part of the QoS profile. These measurements performed by SMF/AMF may be exposed to a trusted third-party network function (NF), such as a multi-access edge computing server (MEC) where the QoS probability distribution is calculated. Alternatively or in addition, the 5GCN may perform a modelling of the QoS measurements and may use the thusly obtained model to calculate the distribution of the average presence time of the QoS in one or more specific QoS levels. For instance, the NWDAF may perform Markov model fitting for the measured QoS. A transition matrix may be derived as the probabilities for the transition from reference QoS to alternative QoS in the measurement period. This transition matrix may be used to extrapolate the stationary probabilities of being in each QoS state. NWDAF may also perform classification and/or clustering of the measured QoS and may use these models to calculate the transition stationary probabilities of the QoS.

The 5GCN (104) may further collect (206) QoE feedback from the application clients (102) and/or QoE metrics from the application function (106). The QoE feedback or metrics may be collected for instance in the form of satisfaction indicators (IDX), i.e. indicators that represent the quality-of-experience (QoE) associated to the application. The QoE feedback from an application client represents a measure of an overall level of satisfaction at the application client. QoE metrics are derived from the QoE feedback from a plurality of application clients. The QoE feedback may be collected from the UEs by the NWDAF through a specific interface. Based on the QoE feedback, the NWDAF may calculate the actual distribution of the QoE. The NWDAF may further receive additional assistance information from the AF, such as the expected QoE distribution for nominal operation of the AF. Alternatively or in addition, QoE metrics may be transmitted to the 5GCN by the AF. For instance, the AF may be configured to calculate the statistical distribution of the QoE and to transmit this calculated statistical distribution to the 5GCN. The 5GCN may further receive additional assistance information from the AF.

The 5GCN (104) may further predict (208) statistical and/or long-term behavior of the quality-of-experience QoE of the application. In an exemplary implementation, it is considered that QoS statistics are available to the 5GCN, the QoS statistics including for instance the QoS probability distribution or the distribution of the average presence time of the QoS in one or more specific QoS levels. In this implementation, the AF may be configured to transmit a QoS-QoE relationship as an additional information to the 5GCN. The 5GCN may further have access to the QoE feedback and/or metrics derived from such feedback, although this is not necessary in this implementation since the QoE feedback may be derived, predicted or estimated from the available QoS statistics and from the QoS-QoE relationship. Alternatively, both the QoS statistics and the QoE feedback and/or metrics may be made available to the 5GCN, thusly allowing the 5GCN to determine a QoS-QoE model from the available measurements by performing a maximum likelihood model fitting with respect to the available QoS and to the available QoE feedback and/or metrics.

The 5GCN may use the QoS-QoE model to derive, predict, extrapolate and/or estimate QoE statistics and/or long-term QoE behavior. The 5GCN may further use this QoS-QoE model to determine a maximum likely estimation of QoS and/or QoE for one or more application sessions. This solution is described below as a learning solution from QoS statistics based on a hidden Markov modelling of the QoS-QoE relationship.

The 5GCN may further use the QoS-QoE model to perform (212) orchestration of resources for the applications in the 5G-RAN and/or in the transport network. The resource orchestration may be performed to generally optimize the long-term QoE of the application, or to specifically optimize a particular quantile of the QoE of the application.

Details are now provided on determining a Hidden Markov Model (HMM) of the QoS-QoE relationship and of QoE dynamics. HMM is a probabilistic model for a stochastic process where the states, i,.e. the QoE levels, are hidden. The network is only able to measure QoS variables that are related to the QoE levels through a probabilistic relation.

Figure 3 is a basic representation of a simplified HMM where it is assumed that the QoE is having two levels QoE= "good" (302) and QoE= "bad" (304). Three QoS variables QoS(1) (306), QoS(2) (308) and QoS(3) (310) are observed and/or measured by the network. These QoS variables may be for example latency, throughput and coverage level.

The dashed arrows represent the transition probabilities between the possible states of the QoE. For instance, the dashed arrow from QoE="good" to QoE="bad" represents the probability, noted Prob(bad|good), that the QoE transitions from the state "good" to the state "bad".

The transition matrix of the hidden states is the matrix "A" that describes the transition probabilities between the possible states of the QoE:

$$A = \begin{bmatrix} Prob(good|good) & Prob(bad|good) \\ Prob(good|bad) & Prob(bad|bad) \end{bmatrix}$$

The solid arrows represent the probabilistic relationships between the possible states of the QoE and the QoS levels. For instance, the solid arrow from QoE="good" to QoS1 represents the probabilistic relationship, noted Prob(QoS1|good) defining the probabilistic distribution of QoS1 when the QoE is in the state "good".

The observation matrix of the measurements is the matrix "B" that describes the probabilistic relationship between the possible states of the QoE and the QoS levels.

$$B = \begin{bmatrix} Prob(Qos(1)|good) & Prob(QoS(2)|good) & Prob(QoS(3)|good) \\ Prob(QoS(2)|bad) & Prob(QoS(2)|bad) & Prob(QoS(3)|bad) \end{bmatrix}$$

The HMM may be initialized using an initial distribution of the QoE states corresponding to the probability vector $\pi$, where Prob(good) and Prob(bad) are the probabilities that the initial QoE is respectively in the state "good" or "bad".

$$\pi = \begin{bmatrix} Prob(good) \\ Prob(bad) \end{bmatrix}$$

One of the key problems of learning HMM is to estimate the parameters such that the joint likelihood of the transition matrix A, the observation matrix B and the initial distribution of the model $\pi$ converges. The technique is known as expectation maximization (EM) algorithm. This algorithm is called the Baum-Welch algorithm in the context of hidden Markovian models.

The overall description of the Baum-Welch algorithm is shown in figure 4, with the following notations:

t is a point in time which has a value comprised between 1 and T,
pt is a value of a QoE state at the time t,
qt is a value of a QoS measurement at the time t.

At an initialization step (402), values are assigned for the HMM parameters in A, B and $\pi$. These values are for instance randomly selected in the literature or set using prior known information if available.

After the initialization step, the Baum-Welch algorithm branches off to a forward step (404) and a backward step (406). The forward step determines the probability $\alpha(i)$ of reaching a QoE state pt at the time t, given that previous QoS measurements follow the partial sequence [q1,..,qt]. This is found recursively. The backward step determines the probability $\beta(i)$ of observing the partial sequence of QoS measurement [qt+1,..,qT], given a starting QoE state pt at time t.

Temporary variables $\gamma(i)$ and $\xi(i,j)$ are determined at an update step (408), following Bayes' theorem according to a known procedure. The temporary variables $\gamma(i)$ and $\xi(i,j)$ are used at an estimation step (410) to estimate new values for A, B and $\pi$.

At a test step (412) a difference is determined between the new values in A, B and $\pi$ and the initial values as assigned during the initialization step (402). The difference is compared with a threshold. When the difference is lower than the threshold, the estimated values of the HMM parameters are determined to be convergent and the new values are retained and output (414). When the difference is lower than the threshold, the estimated values of the HMM parameters are determined not to be convergent and a new initialization step (402) is performed with the new values being assigned to the HMM parameters in A, B and $\pi$.

The algorithm is offline, i.e. the forward-backward steps, update and estimation steps are iterated until convergence of the estimated values of the HMM parameters.

It has been proven that the Baum-Welch (BW) algorithm converges to a local minimum however the parameters corresponding to this local minimum may be away from the expected satisfaction of the application, i.e. the QoE distribution transmitted by the application. Another known drawback of the BW algorithm is its slow convergence.

In order to favor the convergence to a local minimum that is close to the expected satisfaction of the application, it is proposed to adjust the initial step parameters such that the initial QoE distribution is close to the expected satisfaction transmitted by the application. This may be done for example by collecting the available reduced feedback from the application and using a classification algorithm in order to build an initial guess that is close to the initial satisfaction distribution. A naive Bayes classifier can be used with the initial QoE distribution from the AF as the prior distribution. A reduced Boltzmann machine (RBM) also can be used to learn a coarse QoE distribution from the available feedback. An initial distribution may be built from the output of the RBM and from the AF initial distribution

In order to speed-up the convergence of the algorithm, it is further proposed to perform a dimensionality reduction of the measured QoS. A principal component analysis may be performed or an auto-encoder may be applied in order to find relevant QoS features from the QoS data. These relevant features that can be used for tuning the HMM and to provide an initial guess about the observation probability B.

In summary, the workflow of the algorithm is described by figure 5 where focus is brought on processing steps (502, 504, 506, 508) that may be performed by a functional entity of the 5G core network. These processing steps can be performed in an optimized network data analytics function (NWDAF) or network exposure function (NEF).

QoE feedback, metrics or indicators are obtained and used to generate (502):

- an initial distribution of QoE states corresponding to the probability vector $\pi$ and
- an initial matrix A that describes the transition probabilities between the possible states of the QoE.

The initial distribution of QoE states corresponding to the probability vector $\pi$, the initial matrix A and QoS measurements are provided to perform (504) a dimensionality reduction of the QoS measurements. The output of the dimensionality reduction contains:

- an estimation of the initial observation matrix B that describes the probabilistic relationship between the possible states of the QoE and the QoS levels, and
- features extracted from the QoS measurements.

The initial distribution of QoE states corresponding to the probability vector $\pi$, the initial matrices A and B and the QoS features are fed to the Baum-Welch algorithm. After converging, the Baum-Welch algorithm outputs (506):

- estimated matrices A and B that are transmitted to a resource orchestrator, and
- an estimated probability vector $\pi$ that is transmitted to the AF.

The resource orchestrator orchestrates (508) network resources such as RAN resources of the 5G-RAN.

**Claims**

1. Method for determining and/or maximizing a quality-of-experience of an application that is served by a mobile network, the method being implemented by at least one network function of the mobile network, the method comprising:

   - obtaining information indicating a grouped frequency distribution of measurements relating to a quality-of-service provided by the mobile network for the application over a period of time, the grouped frequency distribution having a plurality of grouped time intervals with a one-to-one relationship with a plurality of possible levels of quality-of-service,
   - obtaining or generating a model describing relationships between the possible levels of quality-of-service and possible states of quality-of-experience, and
   - extrapolating a statistical evolution of the quality-of-experience related to the application based on the obtained information and on the model.

2. Method according to claim 1, wherein the grouped frequency distribution is a probability distribution that comprises a plurality of presence time values, a presence time value being associated to at least one corresponding level of quality-of-service of the plurality of possible levels of quality-of-service.

3. Method according to claim 1, wherein the grouped frequency distribution is a stationary distribution that comprises a plurality of average presence time values, an average presence time value being associated to at least one corresponding level of quality-of-service of the plurality of possible levels of quality-of-service.

4. Method according to any one of claims 1 to 3, further comprising:

- obtaining measurements relating to a quality-of-service provided by the mobile network for the application during a measurement period, and
- by analyzing the measurements, determining the grouped frequency distribution.

5. Method according to claim 4, wherein generating the model comprises extracting features from the measurements by performing a dimensionality reduction of the measurements.

6. Method according to claim 5, wherein generating the model further comprises estimating the relationships between the possible levels of quality-of-service and the possible states of quality-of-experience based on the extracted features.

7. Method according to any one of claims 1 to 6, further comprising using, as an input for generating the model, quality-of-experience feedback obtained from a network data analytics function of the mobile network and/or from a network exposure function of the mobile network.

8. Method according to claim 7, wherein generating the model comprises classifying the quality-of-experience feedback to output a distribution of the possible states of quality-of-experience.

9. Method according to any one of claims 1 to 8, further comprising using, as an input for generating the model, one or more quality-of-experience measurements, the one or more quality-of-experience measurements indicating a statistical evolution of the quality-of-experience over the period of time.

10. Method according to claim 8 or 9, wherein the model further comprises an initial distribution of the possible states of quality-of-experience and transitional relationships between the possible states of quality-of-experience.

11. Method according to any one of claims 1 to 10, further comprising adjusting parameters of the model by running an expectation maximization algorithm.

12. Method according to claim 11, wherein the adjusted parameters of the model comprise an adjusted distribution of the possible states of quality-of-experience, and the method further comprises transmitting the adjusted distribution of the possible states of quality-of-experience to an application function corresponding to the application.

13. Method according to claim 11 or 12, wherein the adjusted parameters of the model comprise adjusted transitional relationships between the possible states of quality-of-experience and adjusted relationships between the possible levels of quality-of-service and the possible states of quality-of-experience, the method further comprising transmitting the adjusted transitional relationships and the adjusted relationships to a resource orchestrator.

14. Method according to claim 13, further comprising, at the resource orchestrator, using the adjusted transitional relationships and the adjusted relationships to provision network resources of the mobile network in such a way that a quality of experience, predicted from the adjusted relationships, is maximized..

15. System comprising at least one network function entity of a mobile network, the system being configured for determining and/or maximizing, a quality-of-experience of an application that is served by a mobile network by the means of an application function, by at least:

- obtaining information indicating a grouped frequency distribution of measurements related to a quality-of-service provided by the mobile network for the application over a period of time, the grouped frequency distribution having a plurality of grouped intervals with a one-to-one relationship with a plurality of possible levels of quality-of-service

- obtaining or generating a model describing evolution relationships between the possible levels of quality-of-service and possible states of quality-of-experience, and
- extrapolating a statistical evolution of the quality-of-experience related to the application based on the obtained information and on the model.

16. Non-transitory storage medium storing instructions of a computer program which, when executed by a computer, cause the computer to carry out the method of any one of claims 1 to 14.

**FIG. 1**

**FIG. 2**

**FIG. 3**

**FIG. 4**

**FIG. 5**

# EUROPEAN SEARCH REPORT

Europäisches Patentamt
European Patent Office
Office européen des brevets

**Application Number**

EP 23 30 5588

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/207269 A1 (ASSIA SPE LLC [US]) 14 October 2021 (2021-10-14) * paragraph [0038] - paragraph [0042] * * paragraph [0069] - paragraph [0127]; claims; figures * ----- | 1-16 | INV. H04L41/142 H04L41/147 H04L43/04 H04L43/08 |
| X | US 2020/112907 A1 (DAO NGOC DUNG [CA] ET AL) 9 April 2020 (2020-04-09) * paragraph [0081] - paragraph [0322]; figures * ----- | 1-16 | ADD. H04L41/5067 |
| Y | "3rd Generation Partnership Project; Technical Specification Group Services and System Aspects; Study of Enablers for Network Automation for the 5G System (5GS); Phase 3 (Release 18)", 3GPP STANDARD; TECHNICAL REPORT; 3GPP TR 23.700-81, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , no. V18.0.0 21 December 2022 (2022-12-21), pages 1-278, XP052234765, Retrieved from the Internet: URL:https://ftp.3gpp.org/Specs/archive/23_series/23.700-81/23700-81-i00.zip 23700-81-i00.docx [retrieved on 2022-12-21] * Chapters 6.18,6.50 * ----- -/-- | 1-16 | |

TECHNICAL FIELDS SEARCHED (IPC)

H04L

The present search report has been drawn up for all claims

| Place of search | Date of completion of the search | Examiner |
|---|---|---|
| Munich | 19 September 2023 | Ceccarini, Giulio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

**EP 23 30 5588**

## DOCUMENTS CONSIDERED TO BE RELEVANT

| Category | Citation of document with indication, where appropriate, of relevant passages | Relevant to claim |
|---|---|---|
| Y | "3rd Generation Partnership Project; Technical Specification Group Services and System Aspects; Architecture enhancements for 5G System (5GS) to support network data analytics services (Release 18)", 3GPP STANDARD; 3GPP TS 23.288, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , no. V18.1.0 31 March 2023 (2023-03-31), pages 1-286, XP052284129, Retrieved from the Internet: URL:https://ftp.3gpp.org/Specs/archive/23_ series/23.288/23288-i10.zip 23288-i10.docx [retrieved on 2023-03-31] * Chapters 6.4 – 6.9 * ----- | 1-16 |

**CLASSIFICATION OF THE APPLICATION (IPC)**

**TECHNICAL FIELDS SEARCHED (IPC)**

The present search report has been drawn up for all claims

| Place of search | Date of completion of the search | Examiner |
|---|---|---|
| Munich | 19 September 2023 | Ceccarini, Giulio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 30 5588

This annex lists the patent family members relating to the patent documents cited in the above-mentioned European search report.
The members are as contained in the European Patent Office EDP file on
The European Patent Office is in no way liable for these particulars which are merely given for the purpose of information.

19-09-2023

| Patent document cited in search report | | Publication date | Patent family member(s) | | Publication date |
|---|---|---|---|---|---|
| WO 2021207269 | A1 | 14-10-2021 | AU | 2021252927 A1 | 10-11-2022 |
| | | | CA | 3178285 A1 | 14-10-2021 |
| | | | CN | 115428368 A | 02-12-2022 |
| | | | EP | 4133634 A1 | 15-02-2023 |
| | | | US | 2021314238 A1 | 07-10-2021 |
| | | | US | 2022400065 A1 | 15-12-2022 |
| | | | WO | 2021207269 A1 | 14-10-2021 |
| US 2020112907 | A1 | 09-04-2020 | CN | 112806058 A | 14-05-2021 |
| | | | EP | 3850889 A1 | 21-07-2021 |
| | | | US | 2020112907 A1 | 09-04-2020 |
| | | | US | 2023276344 A1 | 31-08-2023 |
| | | | WO | 2020069662 A1 | 09-04-2020 |

EPO FORM P0459

For more details about this annex : see Official Journal of the European Patent Office, No. 12/82